# EUROPÄISCHE PATENTANMELDUNG

(11) **EP 4 140 935 A1**
(43) Veröffentlichungstag der Anmeldung: **01.03.2023**
(21) Anmeldenummer: 22166802.3
(22) Anmeldetag: 05.04.2022
(51) Int. Cl.: B66F 9/06, B65G 1/137, G06Q 10/00, G07C 11/00, G05D 1/00, B65G 43/00, B66F 9/075, B25J 9/16, G05B 19/418

(54) **VERFAHREN ZUM BETREIBEN EINES AUTONOMEN FLURFÖRDERZEUGS**

(30) Priorität: 22.04.2021 DE 102021110227; 12.05.2021 DE 102021112405
(71) Anmelder: STILL GmbH, 22113 Hamburg (DE); Linde Material Handling GmbH, 63743 Aschaffenburg (DE)
(72) Erfinder: KRUMBHOLZ, Peter, 63869 Jakobsthal (DE); GROH, Jonas, 63743 Aschaffenburg (DE); HÜBNER, Rainer, 22085 Hamburg (DE); PÜTZ, Daniel, 22049 Hamburg (DE)
(74) Vertreter: Patentship Patentanwaltgesellschaft

(57) **Zusammenfassung**

Die Erfindung betrifft ein Verfahren zum Betreiben mindestens eines autonomen Flurförderzeugs (F) in einem intralogistischen System (I), wobei mittels mindestens eines Sensors (C1, C2, C3) des Flurförderzeugs (F) Informationen in einem Umgebungsbereich des Flurförderzeugs (F) erfasst werden. Es wird vorgeschlagen, dass der Sensor (C1, C2, C3) zur Inspektion mindestens eines technischen Elements (E) des intralogistischen Systems (I) verwendet wird.

## Beschreibung

Die Erfindung betrifft ein Verfahren zum Betreiben mindestens eines autonomen Flurförderzeugs in einem intralogistischen System, wobei mittels mindestens eines Sensors des Flurförderzeugs Informationen in einem Umgebungsbereich des Flurförderzeugs erfasst werden.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, zum Beispiel durch eine Spedition, erreicht. Intralogistische Systeme umfassen insbesondere Geräte und Anlagen zur Lager- und Fördertechnik, Hebezeuge, Flurförderzeuge, Kommissioniergeräte, Palettiergeräte, Verpackungsgeräte sowie lagerhallenspezifische Einrichtungen, wie zum Beispiel Regale, automatische Tore, und Fahrwege für die Flurförderzeuge. Solche Geräte, Anlagen und Einrichtungen bilden die technischen Elemente des intralogistischen Systems. Außerdem können zu dem intralogistischen System auch prozessteilnehmende Betriebspersonen, zum Beispiel Bedienpersonen von Flurförderzeugen, Lagermitarbeiter und Lagerleiter gehören.

Beim Betrieb von Flurförderzeugen in einem intralogistischen System kommen häufig Assistenzsysteme zum Einsatz, die eine Bedienung des Flurförderzeugs erleichtern sollen oder sogar einen automatisierten oder teilautomatisierten Betrieb ermöglichen sollen.

Überwachungseinrichtungen mit optischen Signalsendern und Signalempfängern kommen bei Flurförderzeugen in Systemen zur Kollisionsvermeidung oder zur Navigation zum Einsatz. Insbesondere bei automatisierten oder teilautomatisierten Flurförderzeugen spielen optische Sensoren eine große Rolle, damit sich das Flurförderzeug gefahrlos autonom bewegen kann oder zumindest der Fahrer mittels Assistenzsystemen unterstützt werden kann. So sind bereits autonome oder automatisierte Flurförderzeuge im Einsatz, die sich fahrerlos durch Lagerhallen bewegen und selbsttätig Positionen zum Aufnehmen und Abgeben von Waren ansteuern. Ein Beispiel hierfür sind mobile Kommissionierroboter, die sich automatisiert durch ein Lager bewegen können und mit Hilfe eines Greifsystems, insbesondere eines Roboterarms, Objekte zum Beispiel aus einem Regal aufnehmen können.

In all diesen Fällen sind Kollisionsschutzsysteme zur Kollisionsvermeidung erforderlich, damit ein sicherer Betrieb der autonomen oder automatisierten Flurförderzeuge gewährleistet ist und ein unbeabsichtigtes Auffahren auf ein Hindernis oder gar eine Verletzung einer auf der Fahrbahn des Flurförderfahrzeugs befindlichen Person verhindert wird.

Die gängigen Kollisionsschutzsysteme verwenden zur Umgebungsüberwachung Umgebungs-Sensoren, die auf Distanzmessung mittels Laser, Ultraschall oder Radar basieren. Dabei wird der direkte Freiraum in Fahrtrichtung des Flurförderzeugs ermittelt. Die Umgebungsüberwachung mittels Laserscanner erfordert einen erheblichen Investitionsaufwand. Ein Laserscanner besteht aus einer Laserdiode und einem Empfänger, die sich in einem motorangetriebenen, rotierenden Kopf befinden, sowie einem hochauflösenden Inkrementalgeber zur Winkelmessung. Das auf ein Hindernis auffallende Laserlicht wird in sich selbst, also zum Sender, bzw. zu einem unmittelbar daneben montierten Empfänger reflektiert. Da es sich bei Laserscanner bzw. Lasersensoren um Präzisionsgeräte handelt sowie für die Auswertung der dreidimensionalen Messdaten ein aufwendiger Auswerterechner erforderlich ist und die exakte Kalibrierung des Laserscanners einen erheblichen apparativen Aufwand notwendig macht, ist diese Methode sehr teuer. Andererseits ist die Messgenauigkeit bei Radar- und Ultraschallmethoden nicht hoch genug, um fein darauf reagieren zu können.

Kamerabasierte Systeme werden bisher hauptsächlich zur Navigation eingesetzt. Hierzu werden üblicherweise paarweise Kameras zu Stereokamerasystemen zusammengeschaltet, die ein dreidimensionales Bild des gesamten umgebenden Raums aufnehmen. Dabei werden sehr hohe Datenmengen erzeugt, deren Verarbeitung einen erheblichen Rechenaufwand erfordert.

Durch die zunehmende Automatisierung der intralogistischen Systeme werden die menschenleeren Bereiche beispielsweise in Lagerhäusern oder Warenlagern immer größer. In Bereichen, in denen sich keine Personen aufhalten, können automatisierte Systeme deutlich schneller und dadurch auch deutlich effizienter arbeiten. Nachteilig dabei ist, dass für regelmäßige Inspektionen oder bei Auftreten eines einzelnen Fehlers die Anlagen gedrosselt oder ganz abgeschaltet werden müssen, damit eine Person die Anlage betreten und die Situation analysieren kann.

Ein kleiner Fehler oder eine wiederkehrende Routineinspektion kann dadurch schon hohe Kosten erzeugen.

Weiterhin entstehen schleichend unbemerkte Fehler, die von einem Menschen sofort bemerkt würden, aber durch den Einsatz spezialisierter Roboter unerkannt bleiben.

Der vorliegenden Erfindung liegt die Aufgabe zugrunde, ein Verfahren der eingangs genannten Art so auszugestalten, dass auch bei weitgehend automatisierten logistischen Systemen ein zuverlässiger Betrieb ermöglicht wird.

Diese Aufgabe wird erfindungsgemäß dadurch gelöst, dass der Sensor zur Inspektion mindestens eines technischen Elements des intralogistischen Systems verwendet wird.

Die Erfindung geht dabei von der Überlegung aus, dass viele automatisierte oder autonome Flurförderzeuge eine Vielzahl von Sensoren aufweisen. Insbesondere mobile Kommissionierroboter haben in der Regel mehrere hochwertige Kamerasysteme an Bord. Häufig sind diese sogar an einem beweglichen Roboterarm befestigt. Der wesentliche Erfindungsgedanke besteht nun darin, dass vorhandene, automatisierte Flurförderzeuge, zum Beispiel Kommissionierroboter, auch für Wartungs- und Inspektionsaufgaben innerhalb des intralogistischen Systems eingesetzt werden. Hierzu können die fahrzeugeigenen Sensoren verwendet werden, die eigentlich für andere Zwecke, beispielsweise zur Kollisionsverhinderung und/oder zur Navigation und/oder zur Erkennung von zu kommissionierenden Packstücken, vorgesehen sind.

Dabei können die Sensoren des autonomen bzw. automatisierten Flurförderzeugs für unterschiedliche Aufgaben eingesetzt werden:
Besonders bevorzugt wird als technisches Element des intralogistischen Systems mindestens ein Infrastrukturelement verwendet. Der Sensor des Flurförderzeugs wird also zur Inspektion des Infrastrukturelements eingesetzt. Dabei kann es sich bei dem Infrastrukturelement beispielsweise um ein automatisch öffnendes Tor, eine Laderampe, eine Batterieladeeinrichtung etc. handeln. Der Sensor erfasst das Infrastrukturelement und kann Unregelmäßigkeiten erkennen.

Eine weitere vorteilhafte Ausgestaltung sieht vor, dass als technisches Element des intralogistischen Systems mindestens ein Regal verwendet wird. Die Erfindung kann also zur Regalinspektion eingesetzt werden. Sich wiederholende Inspektionen, beispielsweise eine Regalinspektion nach DIN EN 15635, können außerhalb der üblichen Betriebszeiten, zum Beispiel nachts, oder zum Beispiel während Leerfahrten des autonomen Flurförderzeugs automatisiert durchgeführt werden. Hierzu kann eine Foto- bzw. Videodokumentation erfolgen. Es kann aber auch in einer fahrzeuginternen oder fahrzeugexternen Datenverarbeitungseinheit eine Auswertung der Sensordaten durch eine geeignete Software erfolgen.

Von Vorteil ist es auch, als technisches Element des intralogistischen Systems mindestens einen Ladungsträger, insbesondere eine Palette, zu verwenden. Dabei kann kontrolliert werden, ob sich die Palette aktuell zur weiteren automatisierten Kommissionierung eignet. Außerdem kann kontrolliert werden, ob sich ein Material zur Ladungssicherung, zum Beispiel eine Stretchfolie, ein Kantenschutz, eine Zwischenlage etc., an der Palette befindet, welches die automatisierte Kommissionierung erschwert.

Der Sensor kann auch zur Inventur eines Warenbestandes des intralogistischen Systems verwendet werden. Insbesondere, wenn in einem Lager sowohl manuell als auch durch Roboter automatisiert kommissioniert wird, ist es wichtig, eine kontinuierliche Inventur bei den teilentladenen Paletten durchzuführen, um eine prozesssichere Nachschubversorgung sicherstellen zu können. Hierzu können die autonomen Flurförderzeuge, insbesondere die Kommissionierroboter, mit Hilfe ihrer Sensoren bzw. Kamerasysteme bei jeder Vorbeifahrt sämtliche Paletten analysieren und den jeweiligen Bestand an ein Warenmanagementsystem senden. Kommissionierroboter haben in der Regel Sensorik und Software an Bord, um Pakete auf einer Palette zu erkennen, zu vereinzeln, zu lokalisieren und letztlich auch zu zählen. Diese Ausstattung kann zur Inventur genutzt werden.

Gemäß einer besonders bevorzugten Ausgestaltung der Erfindung wird der Sensor zur Erkennung einer Störung des technischen Elements des intralogistischen Systems verwendet. Hierzu kann im Falle einer Störung ein freies, verfügbares, autonomes Flurförderzeug an den Ort der Störung verfahren werden. Der Sensor des Flurförderzeugs kann das betroffene technische Element erfassen und die Sensordaten, beispielsweise in Form eines Livebildes, an einen Servicetechniker senden, der die Situation beurteilen und eine Entscheidung treffen kann, ob eine Person in die Anlage muss, oder ob die Störung zum Beispiel durch einen kurzen Rücklauf oder einen einfachen Reset behoben werden kann.

Gemäß einer besonders bevorzugten Ausgestaltung der Erfindung wird als technisches Element des intralogistischen Systems mindestens ein weiteres in dem intralogistischen System vorhandenes Flurförderzeug verwendet und der Sensor wird zur Erkennung einer Störung des weiteren Flurförderzeugs verwendet. Mit dem Sensor des Flurförderzeugs können somit Störungen an weiteren Flurförderzeugen, die in dem intralogistischen System eingesetzt sind, erkannt werden. Mit dem Flurförderzeug kann hierzu an das weitere Flurförderzeug gefahren werden. Der Sensor des Flurförderzeugs kann das weitere Flurförderzeug und dessen Störung erfassen und die Sensordaten, beispielsweise in Form eines Livebildes, beispielsweise an einen Servicetechniker senden, der die Störung beurteilen und eine Entscheidung zur Störungsbeseitigung an dem weiteren Flurförderzeug treffen kann.

Dabei ist gemäß einer vorteilhaften Weiterbildung der Erfindung vorgesehen, dass zur Behebung der Störung ein Lasthandhabungsmanipulator des Flurförderzeugs verwendet wird. Hierzu kann beispielsweise ein Greifarm oder Roboterarm eines Kommissionierroboters verwendet werden, um zum Beispiel eine Blockade durch ein verkantetes Transportgut zu beheben. Dies kann zum Beispiel auch durch eine Fernsteuerung aus einem weit entfernten Bereich geschehen, so dass der Kommissionierroboter für diese Aufgaben nicht speziell programmiert werden muss, sondern lediglich über eine Remoteanbindung zu einem menschlichen Supervisor verfügen muss. Dieser muss Zugriff auf die Sensorik und die Aktorik des Kommissionierroboters haben.

Eine weitere bevorzugte Ausgestaltung sieht vor, dass der Sensor zur Inspektion und somit zur Kontrolle von Fahrwegen und/oder Fluchtwegen und/oder Fluchttüren verwendet wird. Manuell in einem Lagerhaus platzierte Objekte, wie zum Beispiel Paletten, Gitterboxen und Müllbehälter, können bei einer ungünstigen Platzierung die Umschlagsleistung von automatisierten Flurförderzeugen deutlich beeinträchtigen. Wenn diese Objekte zu nah am Fahrbereich der automatisierten Flurförderzeuge platziert sind oder dort hineinreichen, müssen die automatisierten Flurförderzeuge bei der Vorbeifahrt eventuell die Geschwindigkeit reduzieren oder dem Objekt ausweichen. Durch die fahrzeugeigene Sensorik können die automatisierten Flurförderzeuge solche Hindernisse erkennen, identifizieren und eine entsprechende Meldung machen, damit die Situation an dieser Stelle beispielsweise durch einen manuellen Eingriff verbessert werden kann. Ebenso können die automatisierten Flurförderzeuge mit ihrer Sensorik überwachen, ob Fluchtwege und/oder Fluchttüren frei zugänglich sind.

Zweckmäßigerweise wird als Sensor ein optischer Sensor, insbesondere eine Kamera, eine Infrarotkamera, eine Time-of-Flight-Kamera oder ein Laserscanner, verwendet. Dabei liefert der Sensor in einer technisch einfachen Realisierung Bilddaten an eine Anzeigeeinheit, die von einem Servicepersonal überwacht wird.

In einer technisch weiter entwickelten Realisierung übermittelt der Sensor die Sensordaten an eine fahrzeugeigene Datenverarbeitungseinheit und/oder an eine fahrzeugexterne Datenverarbeitungseinheit, die die Sensordaten auswertet. Auf diese Weise kann auch eine automatisierte Inspektion der technischen Elemente des intralogistischen Systems ermöglicht werden.

Eine besonders vorteilhafte Weiterbildung der Erfindung sieht vor, dass mehrere autonome Flurförderzeuge in dem intralogistischen System betrieben werden, die über unterschiedlich ausgebildete Sensoren verfügen. Dabei sind die Sensoren insbesondere aus einer Auflistung ausgewählt, die optische Sensoren, insbesondere Kameras und Laserscanner, Ultraschallsensoren, Radarsensoren, Temperatursensoren und Mikrofone umfasst.

Hierbei wird davon ausgegangen, dass sich beispielsweise in einem Lagerhaus oder in einem Warenlager typischerweise autonom fahrende Flurförderzeuge für unterschiedliche Anwendungsfälle, zum Beispiel zur Kommissionierung, zum Nachschub, zum Paletten-Streckentransport, zur Lastwagenbeladung und Lastwagenentladung etc., befinden. All diese Flurförderzeuge haben unterschiedliche Aktorik und Sensorik an Bord und damit unterschiedliche Möglichkeiten, zum Beispiel Fehler zu detektieren, aber auch zum Beispiel Fehler zu beheben. Durch die Vielzahl und die Unterschiedlichkeit der Flurförderzeuge hinsichtlich ihrer Aktorik und Sensorik entsteht hierbei eine große räumliche, aber auch technologische Abdeckung, so dass viele Orte des Lagerhauses oder des Warenlagers von vielen unterschiedlichen Sensoren abgetastet werden.

Dabei ist es weiterhin sinnvoll, dass ein von einem Flurförderzeug festgestellter Fehler auch von einem anderen Flurförderzeug behoben werden kann.

Deshalb ist vorzugsweise vorgesehen, dass die Flurförderzeuge Sensordaten untereinander austauschen. Durch diese Vernetzung kann eine Abstimmung zwischen den Flurförderzeugen erfolgen.

Zusätzlich oder alternativ können die Flurförderzeuge auch Sensordaten an einen menschlichen Supervisor übermitteln, der dann darüber entscheiden kann, welches Flurförderzeug einen festgestellten Fehler beheben soll.

Besonders bevorzugt übermitteln die Flurförderzeuge die Sensordaten an eine zentrale Datenverarbeitungseinheit. So kann insbesondere auch ein so genannter Digital Twin des gesamten Lagerhauses oder Warenlagers erzeugt werden. In dieses Modell werden permanent zu jedem Ort alle Daten von verschiedenen Flurförderzeugen, die mit unterschiedlichen Sensoren aufgenommen werden, abgelegt.

Dabei ist gemäß einer vorteilhaften Weiterbildung vorgesehen, dass die zentrale Datenverarbeitungseinheit die Inspektion des mindestens einen technischen Elements des intralogistischen Systems mittels eines Überwachungsalgorithmus automatisiert überwacht.

Die Erfindung bietet eine ganze Reihe von Vorteilen:
Die mit Sensorsystemen ausgestatteten automatisierten oder autonomen Flurförderzeuge, beispielsweise Kommissionierroboter, können für weitere Aufgaben im intralogistischen System, insbesondere in einem Lagerhaus, verwendet werden.

Durch die permanente Überwachung der Fluchtwege und Fluchttüren kann die Sicherheit erhöht werden.

Durch die Kontrolle der Fahrwege kann die Umschlagsleistung anderer, einfacherer, automatisierter Geräte aufrechterhalten bleiben.

Durch die Gewährleistung der Nachschubversorgung sowie die kontinuierliche Überwachung, ob die Paletten automatisiert entladen werden können, kann die prozesssichere Kommissionierung durch Kommissionierroboter sichergestellt werden.

Durch die Livebildfunktionalität sowie die Möglichkeit, den Roboterarm bzw. Greiferarm eines Kommissionierroboters fernsteuern zu können, können in einem menschenleeren Bereich eines Lagerhauses Fehler analysiert werden, ohne die Leistung der Anlage reduzieren zu müssen.

Durch die Durchführung von Regalinspektionen nach DIN EN 15635 mit Hilfe der vorhandenen Sensorik der Flurförderzeuge muss für Routinewartungsaufgaben die Leistung der Anlage nicht reduziert werden.

Weitere Vorteile und Einzelheiten der Erfindung werden anhand des in der schematischen Figur dargestellten Ausführungsbeispiels näher erläutert. Hierbei zeigt die
- Figur: ein, als mobiler Kommissionierroboter ausgebildetes, autonomes Flurförderzeug vor einem Regal.

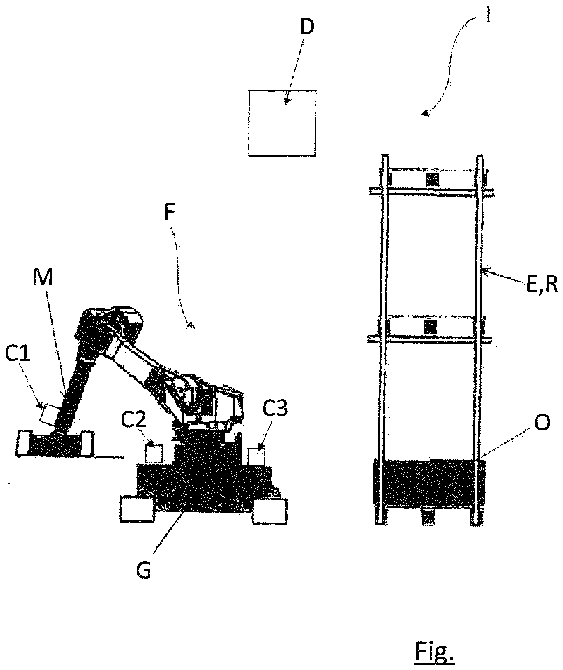

In der Figur ist ein als mobiler Kommissionierroboter ausgebildetes autonomes oder automatisiertes Flurförderzeug F gezeigt, an dem an mehreren Positionen beispielsweise als Kameras ausgebildete optische Sensoren C1, C2, C3 montiert sind. Der Sensor C1 ist am Lasthandhabungsmanipulator M angebracht, der als Roboterarm oder Greiferarm ausgebildet ist. Die Sensoren C2 und C3 sind am Fahrzeuggehäuse G angebracht und nach vorne bzw. nach hinten bzw. seitlich ausgerichtet.

Die optischen Sensoren C1, C2, C3 nehmen die Umgebung auf und übermitteln die Sensordaten zu deren Auswertung an eine fahrzeugeigene oder fahrzeugexterne Datenverarbeitungseinheit D. Die fahrzeugeigenen Sensoren C1, C2, C3 sind eigentlich zur Kollisionsverhinderung und zur Navigation und/oder zur Erkennung von zu kommissionieren Packstücken vorgesehen. Zusätzlich oder alternativ werden die Sensoren C1, C2, C3 für andere Zwecke, nämlich für Wartungs- und Inspektionsaufgaben innerhalb des intralogistischen Systems I eingesetzt.

Insbesondere können die Sensoren C1, C2, C3 zur Inspektion eines technischen Elements E des intralogistischen Systems I, insbesondere des Regals R, eingesetzt werden. Durch eine Auswertung der Sensordaten in der zentralen Datenverarbeitungseinheit D mittels einer geeigneten Software können Störungen im Regal R erkannt werden. Dabei kann es sich zum Beispiel um eine Blockade durch ein verkantetes Objekt O, zum Beispiel durch ein Transportgut, handeln.

Die Datenverarbeitungseinheit D kann das Flurförderzeug F automatisch anweisen, die Störung im Regal R zu beheben. Hierzu kann das Flurförderzeug F den Auftrag erhalten, mittels des Lasthandhabungsmanipulators M die Blockade durch das verkantete Objekt O zu beseitigen. Dieser Vorgang wird durch die Sensoren C1, C2, C3 überwacht und durch die zentrale Datenverarbeitungseinheit D gesteuert.

Alternativ oder zusätzlich können mit den Sensoren C1, C2, C3 des Flurförderzeugs F eine Fehlerbewertung und eine Störungsbeseitigung in dem intralogistischen Systems I und/oder eine Kontrolle von Fahrwege, Fluchtwegen und Fluchttüren und/oder eine Inventur des Warenbestandes und/oder eine Kontrolle von Ladungsträgern erfolgen.

## Patentansprüche

1. Verfahren zum Betreiben mindestens eines autonomen Flurförderzeugs (F) in einem intralogistischen System (I), wobei mittels mindestens eines Sensors (C1, C2, C3) des Flurförderzeugs (F) Informationen in einem Umgebungsbereich des Flurförderzeugs (F) erfasst werden, **dadurch gekennzeichnet, dass** der Sensor (C1, C2, C3) zur Inspektion mindestens eines technischen Elements (E) des intralogistischen Systems (I) verwendet wird.

2. Verfahren nach Anspruch 1, **dadurch gekennzeichnet, dass** als technisches Element (E) des intralogistischen Systems (I) mindestens ein Infrastrukturelement verwendet wird.

3. Verfahren nach Anspruch 1 oder 2, **dadurch gekennzeichnet, dass** als technisches Element (E) des intralogistischen Systems (I) mindestens ein Regal (R) verwendet wird.

4. Verfahren nach einem der Ansprüche 1 bis 3, **dadurch gekennzeichnet, dass** als technisches Element (E) des intralogistischen Systems (I) mindestens ein Ladungsträger, insbesondere eine Palette, verwendet wird.

5. Verfahren nach einem der Ansprüche 1 bis 4, **dadurch gekennzeichnet, dass** der Sensor (C1, C2, C3) zur Inventur eines Warenbestandes des intralogistischen Systems (I) verwendet wird.

6. Verfahren nach einem der Ansprüche 1 bis 5, **dadurch gekennzeichnet, dass** der Sensor (C1, C2, C3) zur Erkennung einer Störung des technischen Elements (E) des intralogistischen Systems (I) verwendet wird.

7. Verfahren nach einem der Ansprüche 1 bis 6, **dadurch gekennzeichnet, dass** als technisches Element (E) des intralogistischen Systems (I) mindestens ein weiteres in dem intralogistischen System (I) vorhandenes Flurförderzeug verwendet wird und der Sensor (C1, C2, C3) zur Erkennung einer Störung des weiteren Flurförderzeugs verwendet wird.

8. Verfahren nach Anspruch 6 oder 7, **dadurch gekennzeichnet, dass** zur Behebung der Störung ein Lasthandhabungsmanipulator (M) des Flurförderzeugs (F) verwendet wird.

9. Verfahren nach einem der Ansprüche 1 bis 8, **dadurch gekennzeichnet, dass** der Sensor (C1, C2, C3) zur Inspektion von Fahrwegen und/oder Fluchtwegen und/oder Fluchttüren verwendet wird.

10. Verfahren nach einem der Ansprüche 1 bis 9, **dadurch gekennzeichnet, dass** als Sensor (C1, C2, C3) ein optischer Sensor (C1, C2, C3) verwendet wird, der Bilddaten an eine Anzeigeeinheit liefert, die von einem Servicepersonal überwacht wird.

11. Verfahren nach einem der Ansprüche 1 bis 10, **dadurch gekennzeichnet, dass** der Sensor (C1, C2, C3) Sensordaten an eine fahrzeugeigene Datenverarbeitungseinheit (D) und/oder eine fahrzeugexterne Datenverarbeitungseinheit (D) übermittelt, die die Sensordaten auswertet.

12. Verfahren nach einem der Ansprüche 1 bis 11, **dadurch gekennzeichnet, dass** mehrere autonome Flurförderzeuge (F) in dem intralogistischen System (I) betrieben werden, die über unterschiedlich ausgebildete Sensoren (C1, C2, C3) verfügen, die insbesondere aus einer Auflistung ausgewählt sind, die optische Sensoren, insbesondere Kameras und Laserscanner, Ultraschallsensoren, Radarsensoren, Temperatursensoren und Mikrofone umfasst.

13. Verfahren nach Anspruch 12, **dadurch gekennzeichnet, dass** die Flurförderzeuge (F) Sensordaten untereinander austauschen.

14. Verfahren nach Anspruch 12 oder 13, **dadurch gekennzeichnet, dass** die Flurförderzeuge (F) Sensordaten an eine zentrale Datenverarbeitungseinheit (D) übermitteln.

15. Verfahren nach Anspruch 14, **dadurch gekennzeichnet, dass** die zentrale Datenverarbeitungseinheit (D) die Inspektion des mindestens einen technischen Elements (E) des intralogistischen Systems (I) mittels eines Überwachungsalgorithmus automatisiert überwacht.
